# EUROPEAN PATENT APPLICATION

(11) **EP 3 322 245 A1**
(43) Date of publication of application: **16.05.2018**
(21) Application number: 15897939.3
(22) Date of filing: 10.07.2015
(51) Int. Cl.: H04W 72/12

(54) **RETRANSMISSION-BASED MULTI-USER SUPERPOSITION TRANSMISSION METHOD, DEVICE AND SYSTEM**

(71) Applicant: Fujitsu Limited, Kawasaki-shi, Kanagawa 211-8588 (JP)
(72) Inventor: XI, Wei, Beijing 100025 (CN); ZHOU, Hua, Beijing 100025 (CN); MOULSLEY, Timothy J., Caterham Surrey CR3 5EE (GB)
(74) Representative: Haseltine Lake LLP
(86) International application number: PCT/CN2015/083796
(87) International publication number: WO 2017/008211

(57) **Abstract**

Embodiments of this disclosure provide a method and apparatus for performing multiuser superposition transmission over repetition-based transmission and a system. In this embodiment, the method includes: an eNB transmits repetition configuration information or repetition configuration information and modulation scheme information of second UE utilizing a repetition-based transmission technique to first UE paired with the second UE for performing MUST transmission, so that the first UE detects data of the second UE and performs interference cancellation according to the repetition configuration information or the repetition configuration information and the modulation scheme information of the second UE, so as to obtain data of the first UE. With the embodiments of this disclosure, unnecessary signaling overhead and repeated detection may be avoided, thereby improving performance and efficiency of MUST transmission.

## Description

### Field

This disclosure relates to the field of communication technologies, and in particular to a method and apparatus for performing multiuser superposition transmission over repetition-based transmission and a system.

### Background

In recent years, as development of the society and progress of technologies, wireless communication technologies greatly change our lives. In order to support exponentially increasing traffics and continuously emerging new traffics, future wireless communication systems should have lower latency and a larger network capacity. And this brings about new challenges to the 4th generation wireless communication systems represented by long-term evolution (LTE)/LTE-advanced. Therefore, global large research institutes and standardization organizations have started studies on the 5th generation wireless communication systems one after another.

Till now, multiple access techniques adopted by all wireless communication systems are orthogonal multiple accesses. As it can be seen from the information theory that nonorthogonal multiple accesses have larger channel capacities than orthogonal multiple accesses. Hence, the nonorthogonal multiple access technique becomes a hot study point on the 5th generation wireless communication systems. In various nonorthogonal multiple access techniques, nothing is more representative than multiuser multiplexing in a power dimension, such as a downlink multiuser superposition transmission (MUST) technique of the 3rd generation partnership project (3GPP) in LTE-advance Rel. 13.

Without loss of generality, a basis principle of the MUST technique shall be described below by taking two pieces of user equipment (UE) as examples.

In transmitting data, an eNB performs superposed coding on data of two pieces of paired UE by fully using a pathloss difference between the two pieces of paired UE, that is, allocating larger power for a farther piece of the two pieces of paired UE, and allocating smaller power for a nearer piece of the two pieces of paired UE. In receiving data, the farther UE is subjected to weaker interference (i.e. data signals of the nearer UE) after experiencing a larger pathloss, as transmission power of itself is relatively small, thus, it may directly detect data signals of itself. And the nearer UE can detect data signals of itself only after detecting the data signals of the farther UE with relatively high signal to noise ratios and then performing interference cancellation on them (subtracting the detected data signals of the farther UE from received signals).

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

Currently, operators need that an LTE/LTE-advance network is able to support machine-type communication UE (MTC UE), and there will be a tremendous amount of MTC UE in the future. Hence, pairing with MTC UE for MUST transmission will be very popular in the future. In order to enhance coverage, the MTC UE will use repetition-based transmission technology, that is, completely same data will be transmitted in multiple consecutive subframes. In frequency division duplexing (FDD) and time division duplexing (TDD) systems, average times of repetition-based transmission are 100-200 and 200-300, respectively.

Such a feature is not utilized in an existing MUST transmission mechanism. On the one hand, an eNB needs to notify a nearer piece of UE of transmission configuration information, such as a modulation scheme, etc., of a farther piece of UE, at each subframe. And on the other hand, although data of the farther piece of UE needing to be detected is completely the same within a repetition period, the nearer piece of UE needs to detect completely same data, i.e. the data of the farther piece of UE, at each subframe, and detection processes of different subframes are completely independent of each other. Obviously, repeated signaling notification to the nearer piece of UE by the eNB and repeated detection of the data of the farther piece of UE by the nearer piece of UE are less efficient, and are completely unnecessary.

In order to solve the above problem, embodiments of this disclosure provide a method and apparatus for performing multiuser superposition transmission over repetition-based transmission and a system, so as to avoid unnecessary signaling overhead and repeated detection, thereby improving performance and efficiency of MUST transmission.

According to a first aspect of the embodiments of this disclosure, there is provided an apparatus for performing multiuser superposition transmission over repetition-based transmission, applicable to an eNB, the apparatus including:
a transmitting unit configured to transmit repetition configuration information or repetition configuration information and modulation scheme information of second UE utilizing a repetition-based transmission technique to first UE paired with the second UE for performing MUST transmission, so that the first UE detects data of the second UE and performs interference cancellation according to the repetition configuration information or the repetition configuration information and the modulation scheme information of the second UE, so as to obtain data of the first UE.

According to a second aspect of the embodiments of this disclosure, there is provided an apparatus for performing multiuser superposition transmission over repetition-based transmission, applicable to first UE, the first UE being paired with second UE for performing MUST transmission, and the second UE utilizing a repetition-based transmission technique, the apparatus including:
an acquiring unit configured to acquire repetition configuration information or repetition configuration information and modulation scheme information of the second UE; and
a detecting unit configured to detect data of the second UE and perform interference cancellation according to the repetition configuration information or the repetition configuration information and the modulation scheme information of the second UE, so as to obtain data of the first UE.

According to a third aspect of the embodiments of this disclosure, there is provided a method for performing multiuser superposition transmission over repetition-based transmission, applicable to an eNB, the method including:
transmitting repetition configuration information or repetition configuration information and modulation scheme information of second UE utilizing a repetition-based transmission technique to first UE paired with the second UE for performing MUST transmission, so that the first UE detects data of the second UE and performs interference cancellation according to the repetition configuration information or the repetition configuration information and the modulation scheme information of the second UE, so as to obtain data of the first UE.

According to a fourth aspect of the embodiments of this disclosure, there is provided a method for performing multiuser superposition transmission over repetition-based transmission, applicable to first UE, the first UE being paired with second UE for performing MUST transmission, and the second UE utilizing a repetition-based transmission technique, the method including:
acquiring repetition configuration information or repetition configuration information and modulation scheme information of the second UE by the first UE; and
detecting data of the second UE and performing interference cancellation by the first UE according to the repetition configuration information or the repetition configuration information and the modulation scheme information of the second UE, so as to obtain data of the first UE.

According to a fifth aspect of the embodiments of this disclosure, there is provided an eNB, including the apparatus as described in the first aspect.

According to a sixth aspect of the embodiments of this disclosure, there is provided UE, including the apparatus as described in the second aspect.

According to a seventh aspect of the embodiments of this disclosure, there is provided a communication system, including an eNB, first UE and second UE, the first UE being paired with the second UE for performing MUST transmission, and the second UE utilizing a repetition-based transmission technique, wherein,
the eNB is configured to:
transmit repetition configuration information or repetition configuration information and modulation scheme information of the second UE to the first UE;
and the first UE is configured to:
   detect data of the second UE and perform interference cancellation according to the repetition configuration information or repetition configuration information and modulation scheme information of the second UE, so as to obtain data of the first UE.

An advantage of the embodiments of this disclosure exists in that with the embodiments of this disclosure, for a scenario where a piece of farther UE paired for performing MUST transmission utilizes a repetition-based transmission technique for data transmission, unnecessary signaling overhead and repeated detection may be avoided, thereby improving performance and efficiency of MUST transmission.

With reference to the following description and drawings, the particular embodiments of this disclosure are disclosed in detail, and the principles of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief Description of the Drawings

The drawings are included to provide further understanding of the present disclosure, which constitute a part of the specification and illustrate the exemplary embodiments of the present disclosure, and are used for setting forth the principles of the present disclosure together with the description. It is clear and understood that the accompanying drawings in the following description are some embodiments of this disclosure, and for those of ordinary skills in the art, other accompanying drawings may be obtained according to these accompanying drawings without making an inventive effort. In the drawings:
FIG. 1 is a schematic diagram of a scenario where two pieces of paired UE perform MUST transmission;
FIG. 2 is a schematic diagram of a structure of one implementation of an apparatus for performing multiuser superposition transmission over repetition-based transmission of an embodiment of this disclosure;
FIG. 3 is a schematic diagram of a structure of another implementation of an apparatus for performing multiuser superposition transmission over repetition-based transmission of an embodiment of this disclosure;
FIG. 4 is a schematic diagram of a structure of one implementation of a detecting unit in the apparatus of FIG. 3;
FIG. 5 is a schematic diagram of a structure of another implementation of the detecting unit in the apparatus of FIG. 3;
FIG. 6 is a flow chart of one implementation of a method for performing multiuser superposition transmission over repetition-based transmission of an embodiment of this disclosure;
FIG. 7 is a flow chart of another implementation of a method for performing multiuser superposition transmission over repetition-based transmission of an embodiment of this disclosure;
FIG. 8 is a schematic diagram of a structure of an eNB of an embodiment of this disclosure;
FIG. 9 is a schematic diagram of a structure of UE of an embodiment of this disclosure; and
FIG. 10 is a schematic diagram of a topology of a communication system of an embodiment of this disclosure.

### Detailed Description

These and further aspects and features of the present disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims. Various embodiments of this disclosure shall be described below with reference to the accompanying drawings. These embodiments are illustrative only, and are not intended to limit this disclosure.

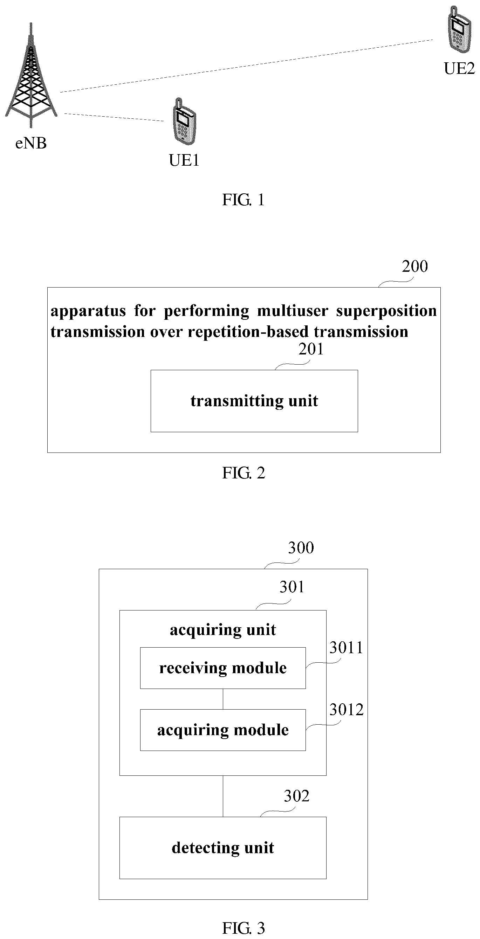

FIG. 1 is a schematic diagram of a scenario where two pieces of paired UE perform MUST transmission. As shown in FIG. 1, UE1 and UE2 are paired to perform MUST transmission, wherein, UE1 is relatively close to an eNB, UE2 is relatively far from the eNB, and UE2 utilizes a repetition-based transmission technique; for example, UE2 is MTC UE. In this embodiment, for convenience of explanation, the UE relatively close to the eNB is referred to as first UE, and the UE relatively far from the eNB is referred to as second UE.

The embodiments of this disclosure shall be described below in detail with reference to the accompanying drawings and particular implementations by taking the scenario shown in FIG. 1 as an example; however, the embodiments of this disclosure are not limited to such a scenario.

### Embodiment 1

The embodiment provides an apparatus for performing multiuser superposition transmission over repetition-based transmission, applicable to an eNB. FIG. 2 is a schematic diagram of a structure of the apparatus. As shown in FIG. 2, the apparatus 200 includes:
a transmitting unit 201 configured to transmit repetition configuration information or repetition configuration information and modulation scheme information of second UE utilizing a repetition-based transmission technique to first UE paired with the second UE for performing MUST transmission, so that the first UE detects data of the second UE and performs interference cancellation according to the repetition configuration information or the repetition configuration information and the modulation scheme information of the second UE, so as to obtain data of the first UE.

In this embodiment, the repetition configuration information may include frequency resource positions occupied by the second UE and related information on a current repetition period of the second UE, such as the number of remaining subframes within the current repetition period of the second UE, or an ending time position of the current repetition period of the second UE, or a beginning time position and a length of the current repetition period of the second UE. In this embodiment, the number of remaining subframes may be expressed as a number of remaining frames and a remainder of subframes; wherein the remainder of subframes is an integer from 0 to 9; the ending time position of the current repetition period may expressed as a system frame number (SFN) and a remainder of subframes; and the beginning time position of the current repetition period may be expressed as a system frame number and a remainder of subframes; and the repetition period may be expressed as a number of subframes or a number of frames and a remainder of subframes. In this embodiment, the repetition configuration information may include one of the above information, or a combination of them, besides the frequency resource positions occupied by the second UE.

In this embodiment, the modulation scheme information is indication information of a modulation scheme used by the second UE. In one implementation, the modulation scheme used by the second UE is defaulted; for example, if the second UE is MTC UE, its modulation scheme is fixed as being quadrature phase shift keying (QPSK), and in this implementation, the modulation scheme information may be omitted, that is, the eNB only transmits the repetition configuration information of the second UE to the first UE, and does not transmit the modulation scheme information of the second UE to the first UE, in which case the modulation scheme of the second UE is defaulted by the first UE as being QPSK. And in another implementation, the modulation scheme used by the second UE is not defaulted, and at this moment, the eNB needs to transmit the repetition configuration information of the second UE and the modulation scheme information of the second UE to the first UE.

In this embodiment, the transmitting unit 201 may transmit the repetition configuration information or the repetition configuration information and the modulation scheme information via broadcast signaling, or may transmit the repetition configuration information or the repetition configuration information and the modulation scheme information via UE-specific signaling.

In one implementation of this embodiment, the broadcast signaling may be system information broadcast 1 (SIB1), via which the transmitting unit 201 may transmit the repetition configuration information or the repetition configuration information and the modulation scheme information of the second UE in a broadcast form, hence, the first UE may obtain the repetition configuration information or the repetition configuration information and the modulation scheme information of the second UE paired with it for MUST transmission from the broadcast signaling. In this implementation, a triggering condition of the broadcast signaling may be periodic triggering, or may be aperiodic triggering. For the aperiodic triggering, it may be triggering at the beginning of the repetition period of the second UE, that is, the transmitting unit 201 may periodically transmit the broadcast signaling containing the above information, and may also transmit the broadcast signaling containing the above information at the beginning of the repetition period of the second UE.

In another implementation of this embodiment, the above UE-specific signaling is for specific UE, which may be radio resource control (RRC) signaling, media access control (MAC) signaling, and physical layer signaling, etc. The physical layer signaling here is, for example, downlink control information (DCI) in a physical downlink control channel (PDCCH) or an enhanced PDCCH (EPDCCH). For example, the transmitting unit 201 may transmits the repetition configuration information or the repetition configuration information and the modulation scheme information via a new domain introduced into DCI of the first UE. In this implementation, a triggering condition of the UE-specific signaling may be triggering at the beginning of the repetition period of the second UE, and may also be triggering when the first UE appears, that is, triggering when the first UE and the second UE are paired successfully.

In this embodiment, alternatively, the first UE may record and maintain a table in local, which is referred to as a repetition information table, each item in the table denoting repetition configuration information and modulation scheme information (optional) of each piece of second UE utilizing the repetition-based transmission technique. And in subsequent MUST transmission, the first UE may attempt to look up its local repetition information table to obtain the repetition configuration information and the modulation scheme information (optional) of the second UE paired with it for MUST transmission.

With the apparatus for performing multiuser superposition transmission over repetition-based transmission of this embodiment, the eNB does not need to use signaling in each subframe to notify the first UE paired for MUST transmission, thereby greatly lowering signaling overhead.

### Embodiment 2

The embodiment provides an apparatus for performing multiuser superposition transmission over repetition-based transmission, applicable to UE, such as the above-described first UE. FIG. 3 is a schematic diagram of a structure of the apparatus. As shown in FIG. 3, the apparatus 300 includes: an acquiring unit 301 and a detecting unit 302.

In this embodiment, the acquiring unit 301 is configured to acquire repetition configuration information or repetition configuration information and modulation scheme information of second UE.

In one implementation of this embodiment, the acquiring unit 301 includes a receiving module 3011 configured to receive the repetition configuration information or the repetition configuration information and the modulation scheme information of the second UE transmitted by an eNB. The manner of transmitting the above information by the eNB has been described in detail in Embodiment 1, the contents of which being incorporated herein, which shall not be described herein any further.

In this implementation, the receiving module 3011 may further save the received repetition configuration information or repetition configuration information and modulation scheme information of the second UE in a repetition information table pre-stored by the first UE. The repetition information table has been described in detail in Embodiment 1, the contents of which being incorporated herein, which shall not be described herein any further. In this implementation, if the repetition information table already includes repetition configuration information or repetition configuration information and modulation scheme information corresponding to the second UE, the receiving module 3011 may replace a record corresponding to the second UE in the repetition information table with the received repetition configuration information or repetition configuration information and modulation scheme information of the second UE.

In another implementation of this embodiment, the acquiring unit 301 includes an acquiring module 3012 configured to acquire the repetition configuration information or the repetition configuration information and the modulation scheme information of the second UE from the repetition information table pre-stored by the first UE. The repetition information table has been described in detail in Embodiment 1, the contents of which being incorporated herein, which shall not be described herein any further.

In this embodiment, the detecting unit 302 is configured to perform interference cancellation on data of the second UE according to the repetition configuration information or the repetition configuration information and the modulation scheme information of the second UE, so as to obtain data of the first UE.

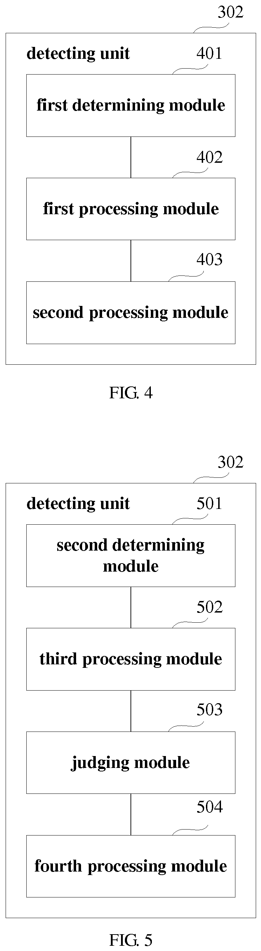

FIG. 4 is a schematic diagram of a structure of one implementation of the detecting unit 302. As shown in FIG. 4, in this implementation, the detecting unit 302 includes a first determining module 401, a first processing module 402 and a second processing module 403.

In this implementation, the first determining module 401 is configured to determine a current repetition period of the second UE and a modulation scheme of the second UE according to the repetition configuration information or the repetition configuration information and the modulation scheme information of the second UE.

In this implementation, the first determining module 401 may determine the current repetition period of the second UE according to the repetition configuration information of the second UE. Furthermore, if the acquiring unit 301 acquires the modulation scheme information of the second UE, the first determining module 401 may determine a modulation scheme used by the second UE according to the modulation scheme information; and if the acquiring unit 301 does not acquire the modulation scheme information of the second UE, the first determining module 401 may determine that a modulation scheme used by the second UE is a default modulation scheme, such as a QPSK modulation scheme.

In this implementation, after obtaining a current repetition period of the second UE, the first processing module 402 and the second processing module 403 may perform corresponding process on data of subframes received within the current repetition period, and details shall be described later. In this implementation, after obtaining the modulation scheme of the second UE, the first processing module 402 may detect data of the second UE in the above subframes accordingly, and details shall be described later.

In this implementation, the first processing module 402 is configured to perform soft combining on data of a first predefined number of subframes received within the current repetition period of the second UE, perform joint detection on the data of the second UE by using the soft combined information according to the modulation scheme of the second UE, and perform interference cancellation on the data of the first predefined number of subframes based on a detection result on the data of the second UE, so as to obtain data of the first UE in the first predefined number of subframes.

In this implementation, within the current repetition period of the second UE, starting from a subframe obtaining repetition configuration information and the modulation scheme information (optional) of the second UE, the first processing module 402 performs soft combining on data of a certain number (referred to as a first predefined number in this embodiment) of received subframes.

In one implementation, the first processing module 402 may take soft information obtained by previously detecting subframes as priori information for detecting data of a current subframe, and detect data of the second UE received within the current subframe in a real-time manner. In this implementation, the first processing module 402 may take soft information of a certain number of previously detected subframes as the priori information, and may also take soft information of all of previously detected subframes as the priori information.

In another implementation, the first processing module 402 may buffer data received in the first predefined number of subframes, and after all data of the first predefined number of subframes are received and soft combined, use priori information obtained by soft combination to jointly detect the data of the second UE.

In this implementation, for bit-level interference cancellation, the above soft information may be a logarithm likelihood ratio (LLR); and for symbol-level interference cancellation, the above soft information may be a posterior probability.

In this implementation, in a process of detecting the data of the second UE by the first processing module 402, if the first UE receives the above modulation scheme information of the second UE transmitted by the eNB, the first processing module 402 determines the modulation scheme of the second UE according to the modulation scheme information; and if the first UE does not receive the above modulation scheme information of the second UE transmitted by the eNB, the first processing module 402 determines that the modulation scheme of the second UE is a default modulation scheme, such as a QPSK modulation scheme. As a soft combination manner is used, reliability of the detection and precision of the interference cancellation may be relatively improved.

In this implementation, the second processing module 403 is configured to perform interference cancellation on data of subsequent subframes received within the current repetition period of the second UE by using the detection result on the data of the second UE, so as to obtain data of the first UE in the subsequent subframes.

In this implementation, for the data of subsequent subframes received within the current repetition period of the second UE, the second processing module 403 does not detect the data of the second UE in the received subsequent subframes. Instead, the second processing module 403 performs interference cancellation on the data in the received subsequent subframes by directly using the previous detection result on the data of the second UE taking which as interference, and then detects data of itself (the first UE) according to the data after the interference cancellation.

In this implementation, the second processing module 403 needs not to detect the data of the second UE, thereby greatly simplifying operations and complexity of the first UE.

FIG. 5 is a schematic diagram of a structure of another implementation of the detecting unit 302. As shown in FIG. 5, in this implementation, the detecting unit 302 includes a second determining module 501, a third processing module 502, a judging module 503 and a fourth processing module 504; wherein, principles of the determining module 501, the first processing module 502 and the second processing module 504 are identical to those of the determining module 401, the first processing module 402 and the second processing module 403 in the embodiment shown in FIG. 4, the contents of which being incorporated herein, which shall not be described herein any further.

In this implementation, processing of the second determining module 501 is identical to that of the first determining module 401 in the implementation shown in FIG. 4, the contents of which being incorporated herein, which shall not be described herein any further.

In this implementation, what is different from the implementation shown in FIG. 4 is that the third processing module 502 takes the soft information obtained in the previous detection on the subframes as priori information for detection on the current subframe, and detects the data of the second UE in a real-time manner according to data received in the current subframe. In particular, the third processing module 502 detects the data of the second UE in the current repetition period of the second UE according to the modulation scheme of the second UE by using soft information, accumulated by soft combining in a process of detecting data of previous subframes, and received data of the current subframe, performs interference cancellation on the data in the current subframe based on a detection result on the data of the second UE to obtain data of the first UE in the current subframe, and adds soft information obtained by detecting the data of the second UE in the current subframe into the accumulated soft information.

In this implementation, the judging module 503 is configured to judge whether reliability of detecting the data of the second UE is greater than a first threshold value, or judge whether the data of the first UE have passed cyclic redundancy check. If it is judged as yes, the process returns to the fourth processing module 504, the fourth processing module 504 performs interference cancellation on the data of the subsequent subframes received within the current repetition period of the second UE, so as to obtain the data of the first UE in the subsequent subframes. And if it is judged as no, the process returns to the third processing module 501, the third processing module 501 performs the above-described processing on the received subframes.

In one implementation of FIG. 5, the reliability of detecting the data of the second UE is taken as a basis for whether detecting the data of the second UE. If the reliability of detecting the data of the second UE exceeds the first threshold value, the data of the second UE shall not be detected in the subsequent subframes within the current repetition period, and the fourth processing module 504 directly performs interference cancellation on the received data, so as to obtain the data of the first UE; otherwise, the third processing module 502 proceeds with detecting the data of the second UE in the received subframes by using the soft information accumulated by soft combination within the current repetition period of the second UE, until the reliability of detecting the data of the second UE exceeds the first threshold value.

In this implementation, for bit-level interference cancellation, an indicator of the reliability is an LLR; and for symbol-level interference cancellation, an indicator of the reliability is a posterior probability. That is, the reliability of detecting the data of the second UE may be either a posterior probability (for symbol-level interference cancellation) of detecting the data of the second UE, or an amplitude (an absolute value) of soft information, such as an LLR, etc, and this implementation is not limited thereto.

In another implementation of FIG. 5, whether the detected data of the first UE have passed CRC is taken as a basis for whether detecting the data of the second UE. If the detected data of the first UE have passed CRC, the data of the second UE shall not be detected in the subsequent subframes within the current repetition period, and the fourth processing module 504 directly performs interference cancellation on the received data, so as to obtain the data of the first UE; otherwise, the third processing module 502 proceeds with detecting the data of the second UE in the received subframes by using the soft information accumulated by soft combination within the current repetition period of the second UE, until the detected data of the first UE have passed CRC.

With the apparatus for performing multiuser superposition transmission over repetition-based transmission of this embodiment, the first UE needs not to always detect the data of the second UE, thereby greatly simplifying operations and complexity of the first UE.

### Embodiment 3

The embodiment provides a method for performing multiuser superposition transmission over repetition-based transmission, applicable to an eNB. As principles of the method are similar to that of the apparatus of Embodiment 1, the implementation of the apparatus of Embodiment 1 may be referred to for implementation of the method, with identical contents being not going to be described herein any further.

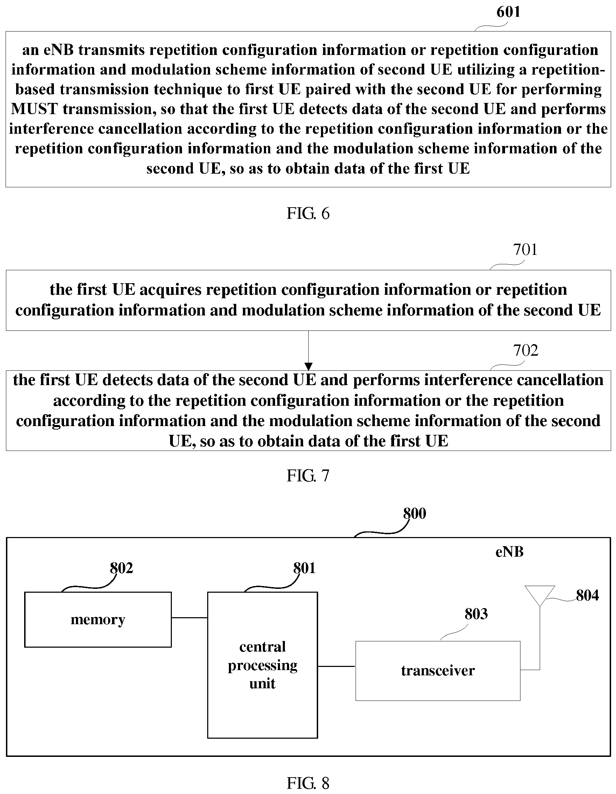

FIG. 6 is a flowchart of the method. Referring to FIG. 6, the method includes:
step 601: an eNB transmits repetition configuration information or repetition configuration information and modulation scheme information of second UE utilizing a repetition-based transmission technique to first UE paired with the second UE for performing MUST transmission, so that the first UE detects data of the second UE and performs interference cancellation according to the repetition configuration information or the repetition configuration information and the modulation scheme information of the second UE, so as to obtain data of the first UE.

In this embodiment, the above repetition configuration information includes frequency resource positions occupied by the second UE and one of the following information or a combination of them:
the number of remaining subframes within a current repetition period of the second UE; wherein the number of remaining subframes may be expressed as a number of remaining frames and a remainder of subframes; and wherein the remainder of subframes is an integer from 0 to 9;
an ending time position of the current repetition period of the second UE; wherein, the ending time position of the current repetition period may be expressed as a system frame number and a remainder of subframes; and
a beginning time position and a length of the current repetition period of the second UE; wherein, the beginning time position of the current repetition period may be expressed as a system frame number and a remainder of subframes, and the current repetition period may be expressed as a number of subframes or a number of frames and a remainder of subframes.

In this embodiment, the modulation scheme information is indication information of a modulation scheme used by the second UE.

In this embodiment, the eNB transmits the repetition configuration information or the repetition configuration information and the modulation scheme information via broadcast signaling or UE-specific signaling.

In this embodiment, a triggering condition of the broadcast signaling may be periodic triggering, or may be aperiodic triggering. For the aperiodic triggering, it may be triggering at the beginning of the repetition period of the second UE.

In this embodiment, a triggering condition of the UE-specific signaling may be triggering at the beginning of the repetition period of the second UE, or may be triggering when the first UE appears.

In this embodiment, the UE-specific signaling may be RRC signaling, or MAC signaling, or physical layer signaling, such as DCI signaling in a PDCCH or an EPDCCH.

With the method for performing multiuser superposition transmission over repetition-based transmission of this embodiment, the eNB does not need to use signaling in each subframe to notify the first UE paired for MUST transmission, thereby greatly lowering signaling overhead.

### Embodiment 4

The embodiment further provides a method for performing multiuser superposition transmission over repetition-based transmission, applicable to UE, such as the above-described first UE, the first UE being paired with second UE for performing MUST transmission, and the second UE utilizing a repetition-based transmission technique. As principles of the method are similar to that of the apparatus of Embodiment 2, the implementation of the apparatus of Embodiment 2 may be referred to for implementation of the method, with identical contents being not going to be described herein any further.

FIG. 7 is a flowchart of the method. Referring to FIG. 7, the method includes:
step 701: the first UE acquires repetition configuration information or repetition configuration information and modulation scheme information of the second UE; and
step 702: the first UE detects data of the second UE and performs interference cancellation according to the repetition configuration information or the repetition configuration information and the modulation scheme information of the second UE, so as to obtain data of the first UE.

In one implementation of step 701, the first UE may acquire the repetition configuration information or the repetition configuration information and the modulation scheme information of the second UE by receiving the repetition configuration information or the repetition configuration information and the modulation scheme information of the second UE transmitted by an eNB. Alternatively, the first UE may also save the received repetition configuration information or repetition configuration information and modulation scheme information of the second UE in a pre-stored repetition information table. Alternatively, if there already exist repetition configuration information or repetition configuration information and modulation scheme information corresponding to the second UE in the repetition information table, the first UE may replace a record corresponding to the second UE in the repetition information table with the received repetition configuration information or repetition configuration information and modulation scheme information of the second UE.

In another implementation of step 701, the first UE may acquire the repetition configuration information or the repetition configuration information and the modulation scheme information of the second UE from the pre-stored repetition information table.

In one implementation of step 702, the first UE may determine a current repetition period of the second UE and a modulation scheme of the second UE according to the repetition configuration information or the repetition configuration information and the modulation scheme information of the second UE, perform soft combining on data of a first predefined number of subframes received within the current repetition period of the second UE, perform joint detection on the data of the second UE by using the soft combined information according to the modulation scheme of the second UE, and perform interference cancellation on the data of the first predefined number of subframes based on a detection result on the data of the second UE, so as to obtain data of the first UE in the first predefined number of subframes, and perform interference cancellation on data of subsequent subframes received within the current repetition period of the second UE by using the detection result on the data of the second UE, so as to obtain data of the first UE in the subsequent subframes.

In another implementation of step 702, the first UE may further determine the current repetition period of the second UE and the modulation scheme of the second UE according to the repetition configuration information or the repetition configuration information and the modulation scheme information of the second UE, detect the data of the second UE in the current repetition period of the second UE according to the modulation scheme of the second UE by using soft information accumulated by soft combining in a process of detecting data of previous subframes and received data of a current subframe, perform interference cancellation on the data in the current subframe based on a detection result on the data of the second UE to obtain data of the first UE in the current subframe, and add soft information obtained by detecting the data of the second UE in the current subframe into the accumulated soft information, judge whether reliability of detecting the data of the second UE is greater than a first threshold value, or judge whether the data of the first UE have passed cyclic redundancy check, perform interference cancellation on data of the subsequent subframes received within the current repetition period of the second UE by using the detection result on the data of the second UE when it is judged as yes, so as to obtain data of the first UE in the subsequent subframes, and proceed with processing on the data of the second UE in the received subsequent subframes when it is judged as no.

In this implementation, the current repetition period of the second UE may be determined according to the repetition configuration information of the second UE, and the modulation scheme of the second UE may be determined according to the acquired modulation scheme information, may also be defaulted.

In this implementation, for bit-level interference cancellation, an indicator of the reliability is a logarithm likelihood ratio (LLR); and for symbol-level interference cancellation, an indicator of the reliability is a posterior probability.

With the method for performing multiuser superposition transmission over repetition-based transmission of this embodiment, the first UE needs not to always detect the data of the second UE, thereby greatly simplifying operations and complexity of the first UE.

### Embodiment 5

The embodiment provides an eNB, including the apparatus for performing multiuser superposition transmission over repetition-based transmission described in Embodiment 1.

FIG. 8 is a schematic diagram of a structure of the eNB of the embodiment of this disclosure. As shown in FIG. 8, the eNB 800 may include a central processing unit (CPU) 801 and a memory 802, the memory 802 being coupled to the central processing unit 801. In this embodiment, the memory 802 may store various data, and furthermore, it may store a program for information processing, and execute the program under control of the central processing unit 801, so as to receive various information transmitted by the UE, and transmit various information transmitted to the UE.

In one implementation, the functions of the apparatus for performing multiuser superposition transmission over repetition-based transmission described in Embodiment 1 may be integrated into the central processing unit 801.

In another implementation, the apparatus for performing multiuser superposition transmission over repetition-based transmission described in Embodiment 1 and the central processing unit 801 may be configured separately. For example, the apparatus for performing multiuser superposition transmission over repetition-based transmission described in Embodiment 1 may be configured as a chip connected to the central processing unit 801, with its functions being realized under control of the central processing unit 801.

Furthermore, as shown in FIG. 8, the eNB 800 may include a transceiver 803, and an antenna 804, etc. In this embodiment, functions of the above components are similar to those in the prior art, and shall not be described herein any further. It should be noted that the eNB 800 does not necessarily include all the parts shown in FIG. 8, and furthermore, the eNB 800 may include parts not shown in FIG. 8, and the prior art may be referred to.

With the eNB of this embodiment, the eNB does not need to use signaling in each subframe to notify the first UE paired for MUST transmission, thereby greatly lowering signaling overhead.

### Embodiment 6

The embodiment provides UE, including the apparatus for performing multiuser superposition transmission over repetition-based transmission described in Embodiment 2.

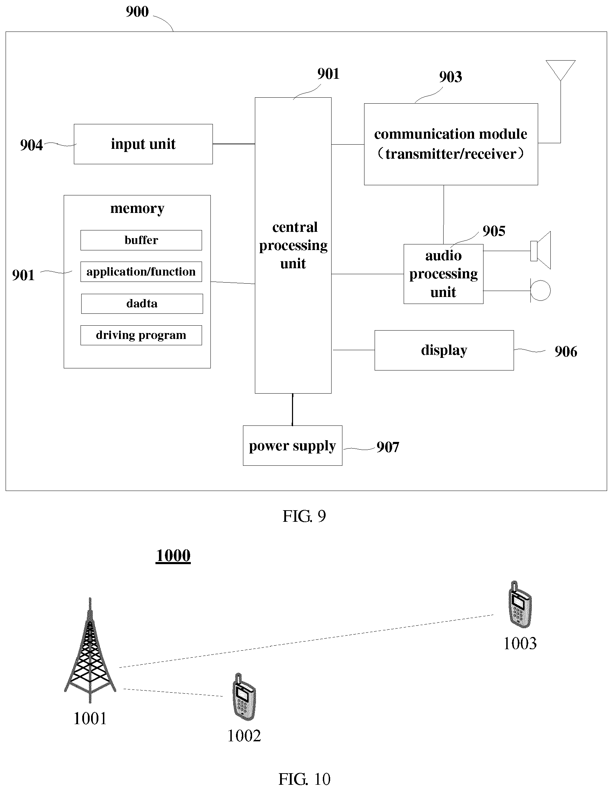

FIG. 9 is a block diagram of a systematic structure of the UE 900 of the embodiment of this disclosure. As shown in FIG. 9, the UE 900 may include a central processing unit 901 and a memory 902, the memory 902 being coupled to the central processing unit 901. It should be noted that this figure is illustrative only, and other types of structures may also be used, so as to supplement or replace this structure and achieve a telecommunications function or other functions.

In one implementation, the functions of the apparatus for performing multiuser superposition transmission over repetition-based transmission may be integrated into the central processing unit 901.

In another implementation, the apparatus for performing multiuser superposition transmission over repetition-based transmission and the central processing unit 901 may be configured separately. For example, the apparatus for performing multiuser superposition transmission over repetition-based transmission may be configured as a chip connected to the central processing unit 901, with its functions being realized under control of the central processing unit 901.

As shown in FIG. 9, the UE 900 may further include a communication module 903, an input unit 904, an audio processing unit 905, a display 906 and a power supply 907. It should be noted that the UE 900 does not necessarily include all the parts shown in FIG. 9, and furthermore, the UE 900 may include parts not shown in FIG. 9, and the prior art may be referred to.

As shown in FIG. 9, the central processing unit 901 is sometimes referred to as a controller or control, and may include a microprocessor or other processor devices and/or logic devices. The central processing unit 901 receives input and controls operations of every components of the UE 900.

In this embodiment, the memory 902 may be, for example, one or more of a buffer memory, a flash memory, a hard drive, a mobile medium, a volatile memory, a nonvolatile memory, or other suitable devices, which may store the above information related to the first information, the second information, the indication information and the identification information, and may further store a program executing related information. And the central processing unit 901 may execute the program stored in the memory 902, so as to realize information storage or processing, etc. Functions of other parts are similar to those of the prior art, which shall not be described herein any further. The parts of the UE 900 may be realized by specific hardware, firmware, software, or any combination thereof, without departing from the scope of the present disclosure.

With the UE of this embodiment, the first UE needs not to always detect the data of the second UE, thereby greatly simplifying operations and complexity of the first UE.

### Embodiment 7

The embodiment further provides a communication system, including an eNB, first UE and second UE, the first UE being paired with the second UE for performing MUST transmission, and the second UE utilizing a repetition-based transmission technique, and including the UE described in Embodiment 6 and the eNB described in Embodiment 5.

FIG. 10 is a schematic diagram of a structure of an implementation of the communication system. As shown in FIG. 10, the communication system 1000 includes: an eNB 1001, first UE 1002 and second UE 1003. In this embodiment, the eNB 1001 may be the eNB 800 described in Embodiment 5, and the first UE 1002 may be the UE 900 described in Embodiment 6. As the eNB 800 and the UE 900 have been described in detail in the above embodiments, the contents of which are incorporated herein, which shall not be described herein any further.

In this embodiment, the eNB 1001 may be configured to transmit repetition configuration information or repetition configuration information and modulation scheme information of the second UE 1003 to the first UE 1002.

In this embodiment, the first UE 1002 may be configured to detect data of the second UE and perform interference cancellation according to the repetition configuration information or repetition configuration information and modulation scheme information of the second UE, so as to obtain data of the first UE 1002.

With the communication system of this embodiment, the eNB does not need to use signaling in each subframe to notify the first UE paired for MUST transmission, thereby greatly lowering signaling overhead. And the first UE needs not to always detect the data of the second UE, thereby greatly simplifying operations and complexity of the first UE.

An embodiment of the present disclosure further provides a computer readable program code, which, when executed in an information processing apparatus or an eNB, will cause a computer unit to carry out the method for performing multiuser superposition transmission over repetition-based transmission described in Embodiment 3 in the information processing apparatus or the eNB.

An embodiment of the present disclosure further provides a computer readable medium, including a computer readable program code, which will cause a computer unit to carry out the method for performing multiuser superposition transmission over repetition-based transmission described in Embodiment 3 in an information processing apparatus or an eNB.

An embodiment of the present disclosure further provides a computer readable program code, which, when executed in an information processing apparatus or UE, will cause a computer unit to carry out the method for performing multiuser superposition transmission over repetition-based transmission described in Embodiment 4 in the information processing apparatus or the UE.

An embodiment of the present disclosure further provides a computer readable medium, including a computer readable program code, which will cause a computer unit to carry out the method for performing multiuser superposition transmission over repetition-based transmission described in Embodiment 4 in an information processing apparatus or UE.

The above apparatuses and methods of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the spirits and principles of the present disclosure, and such variants and modifications fall within the scope of the present disclosure.

## Claims

1. An apparatus for performing multiuser superposition transmission over repetition-based transmission, applicable to an eNB, the apparatus comprising:
a transmitting unit configured to transmit repetition configuration information or repetition configuration information and modulation scheme information of second UE utilizing a repetition-based transmission technique to first UE paired with the second UE for performing MUST transmission, so that the first UE detects data of the second UE and performs interference cancellation according to the repetition configuration information or the repetition configuration information and the modulation scheme information of the second UE, so as to obtain data of the first UE.

2. The apparatus according to claim 1, wherein the repetition configuration information comprises frequency resource positions occupied by the second UE and one of the following information or a combination of them:
the number of remaining subframes within a current repetition period of the second UE;
an ending time position of the current repetition period of the second UE; and
a beginning time position and a length of the current repetition period of the second UE.

3. The apparatus according to claim 2, wherein,
the number of remaining subframes is expressed as a number of remaining frames and a remainder of subframes; wherein the remainder of subframes is an integer from 0 to 9;
the ending time position of the current repetition period is expressed as a system frame number and a remainder of subframes;
the beginning time position of the current repetition period is expressed as a system frame number and a remainder of subframes, and the current repetition period is expressed as a number of subframes or a number of frames and a remainder of subframes.

4. The apparatus according to claim 1, wherein the modulation scheme information is indication information of a modulation scheme used by the second UE.

5. The apparatus according to claim 1, wherein the transmitting unit transmits the repetition configuration information or the repetition configuration information and the modulation scheme information via broadcast signaling or UE-specific signaling.

6. The apparatus according to claim 5, wherein a triggering condition of the broadcast signaling comprises:
periodic triggering or aperiodic triggering;
the aperiodic triggering comprising: triggering at the beginning of the repetition period of the second UE.

7. The apparatus according to claim 5, wherein a triggering condition of the UE-specific signaling comprises:
triggering at the beginning of the repetition period of the second UE; or
triggering when the first UE appears.

8. The apparatus according to claim 5, wherein the UE-specific signaling comprises:
radio resource control (RRC) signaling; or
medium access control (MAC) signaling; or
physical layer signaling.

9. The apparatus according to claim 8, wherein the physical layer signaling comprises:
downlink control information (DCI) signaling in a physical downlink control channel (PDCCH) or an enhanced PDCCH (EPDCCH).

10. An apparatus for performing multiuser superposition transmission over repetition-based transmission, applicable to first UE, the first UE being paired with second UE for performing MUST transmission, and the second UE utilizing a repetition-based transmission technique, the apparatus comprising:
an acquiring unit configured to acquire repetition configuration information or repetition configuration information and modulation scheme information of the second UE; and
a detecting unit configured to detect data of the second UE and perform interference cancellation according to the repetition configuration information or the repetition configuration information and the modulation scheme information of the second UE, so as to obtain data of the first UE.

11. The apparatus according to claim 10, wherein the acquiring unit comprises:
a receiving module configured to receive the repetition configuration information or the repetition configuration information and the modulation scheme information of the second UE transmitted by an eNB.

12. The apparatus according to claim 11, wherein,
the receiving module further saves the received repetition configuration information or repetition configuration information and modulation scheme information of the second UE in a repetition information table pre-stored by the first UE.

13. The apparatus according to claim 12, wherein if the repetition information table already comprises repetition configuration information or repetition configuration information and modulation scheme information corresponding to the second UE, the receiving module replaces a record corresponding to the second UE in the repetition information table with the received repetition configuration information or repetition configuration information and modulation scheme information of the second UE.

14. The apparatus according to claim 10, wherein the acquiring unit comprises:
an acquiring module configured to acquire the repetition configuration information or the repetition configuration information and the modulation scheme information of the second UE from the repetition information table pre-stored by the first UE.

15. The apparatus according to claim 10, wherein the detecting unit comprises:
a first determining module configured to determine a current repetition period of the second UE and a modulation scheme of the second UE according to the repetition configuration information or the repetition configuration information and the modulation scheme information of the second UE;
a first processing module configured to perform soft combining on data of a first predefined number of subframes received within the current repetition period of the second UE, perform joint detection on the data of the second UE by using the soft combined information according to the modulation scheme of the second UE, and perform interference cancellation on the data of the first predefined number of subframes based on a detection result on the data of the second UE, so as to obtain data of the first UE in the first predefined number of subframes; and
a second processing module configured to perform interference cancellation on data of subsequent subframes received within the current repetition period of the second UE by using the detection result on the data of the second UE, so as to obtain data of the first UE in the subsequent subframes.

16. The apparatus according to claim 15, wherein the first determining module determines the current repetition period of the second UE according to the repetition configuration information of the second UE, and determines the modulation scheme of the second UE according to the modulation scheme information of the second UE or default configuration.

17. The apparatus according to claim 10, wherein the detecting unit comprises:
a second determining module configured to determine a current repetition period of the second UE and a modulation scheme of the second UE according to the repetition configuration information or the repetition configuration information and the modulation scheme information of the second UE;
a third processing module configured to detect the data of the second UE in the current repetition period of the second UE according to the modulation scheme of the second UE by using soft information, accumulated by soft combining in a process of detecting data of previous subframes, and received data of a current subframe, perform interference cancellation on the data in the current subframe based on a detection result on the data of the second UE to obtain data of the first UE in the current subframe, and add soft information obtained by detecting the data of the second UE in the current subframe into the accumulated soft information;
a judging module configured to judge whether reliability of detecting the data of the second UE is greater than a first threshold value, or judge whether the data of the first UE have passed cyclic redundancy check; and
a fourth processing module configured to perform interference cancellation on data in subsequent subframes received within the current repetition period of the second UE by using the detection result on the data of the second UE when it is judged as yes by the judging module, so as to obtain data of the first UE in the subsequent subframes;
and the third processing module proceeds with processing the subsequent subframes when it is judged as no by the judging module.

18. The apparatus according to claim 17, wherein the second determining module determines the current repetition period of the second UE according to the repetition configuration information of the second UE, and determines the modulation scheme of the second UE according to the modulation scheme information of the second UE or the default configuration.

19. The apparatus according to claim 17, wherein,
for bit-level interference cancellation, an indicator of the reliability is a logarithm likelihood ratio (LLR);
and for symbol-level interference cancellation, the indicator of the reliability is a posterior probability.

20. A communication system, comprising an eNB, first UE and second UE, the first UE being paired with the second UE for performing MUST transmission, and the second UE utilizing a repetition-based transmission technique, wherein,
the eNB is configured to:
transmit repetition configuration information or repetition configuration information and modulation scheme information of the second UE to the first UE;
and the first UE is configured to:
detect data of the second UE and performs interference cancellation according to the repetition configuration information or repetition configuration information and modulation scheme information of the second UE, so as to obtain data of the first UE.
